# FASCICULE DE BREVET EUROPEEN

(11) **EP 1 024 011 B1**
(45) Date de publication et mention de la délivrance du brevet: **26.04.2006**
(21) Numéro de dépôt: 99402763.9
(22) Date de dépôt: 05.11.1999
(51) Int. Cl.: B41J 2/325, B60R 13/10

(54) **Procédé de fabrication de plaques d'identification combinant l'impression d'un film souple, puis son assemblage bord a bord avec une plaque transparente adhésive de dimensions et formes identiques**
Verfahren zur Herstellung von Kennzeichnungsschildern durch Drucken auf einen nachgiebigen Film, durch anschliessendes Aufbringen dieses Films auf eine transparente klebende Platte gleicher Abmessung und Form
Method of manufacturing identification plates combining printing on a flexible film and then assembling it abuttingly with an adhesive transparent plate having the same dimension and shape

(43) Date de publication de la demande: 02.08.2000
(73) Titulaire: Charbonnier, Denis, 62220 Carvin (FR)
(72) Inventeur: Bridoux, Eric, 62200 Carvin (FR); Charbonnier, Denis, 92300 Levallois-Perret (FR)
(74) Mandataire: Hietter, Laurent

(56) Documents cités:
- EP-A- 0 613 804
- EP-A- 0 806 752
- EP-A- 0 853 025
- FR-A- 2 238 409

## Description

La présente invention concerne un procédé de fabrication combinant l'impression d'un film souple préalablement pré-découpé, le calage de ce film souple imprimé par rapport à une plaque transparente adhésive de dimensions et formes sensiblement identiques à ce dernier, le collage sur une petite surface de ces deux éléments en respectant leurs calages mutuels, puis leur assemblage bords à bords sur toute leur surface par calandrage.

Dans l'état actuel de la technique, pour la réalisation de plaques d'identification ou encore d'immatriculation pour les automobiles comportant un texte, un motif, ou des chiffres visibles à travers une plaque transparente et/ou protectrice, on utilise une méthode qui consiste à assembler manuellement les textes, motifs ou chiffres en sandwich entre un fond coloré ou rétro-réfléchissant et la face transparente.

Le positionnement de ces différents textes, motifs ou chiffres, n'est pas aisé et nécessite une main d'oeuvre spécialisée. Toutes ces opérations manuelles engendrent des rebuts de fabrication et des pertes de temps.

De plus, le collage d'un film souple sur une plaque adhésive n'est pas aisé. En effet, le film doit être rapporté sur la plaque avec beaucoup de précautions pour éviter d'emprisonner des bulles d'air entre les deux matériaux. La solution la plus classique consiste à venir presser le film sur la plaque adhésive entre les deux rouleaux d'une calandre.

Par contre, cette solution ne permet pas un positionnement précis du film, qui est souvent conditionné en bobine, par rapport à la plaque.

Dans ce dernier cas, la découpe du film souple est réalisé après son collage sur une plaque transparente, ou bien une association de films souples transparents formant une plaque, et il est nécessaire d'inclure dans le procédé un dispositif de découpe précis et onéreux. De plus, si l'on souhaite obtenir un produit fini avec des angles arrondis, le procédé de découpe devient complexe car il doit également séparer les chutes du produit fini.

Lorsque le film et la plaque adhésive sont préalablement pré-découpés, la manipulation est encore plus hasardeuse car quatre actions doivent est réalisées :
a - le film et la plaque adhésive doivent être superposés, sans contact entre eux, de façon précise,
b - tout en respectant le calage précédent, un bord du film doit être mis en contact avec un bord de la plaque adhésive,
c - la jonction partielle ainsi réalisée doit être introduite entre les deux cylindres d'une calandre,
d - la rotation des cylindres vient rapporter le film sur la plaque adhésive tout en évitant le contact du film sur la plaque avant leur jonction dans la calandre.

Ces actions sont généralement réalisées manuellement et demandent une grande dextérité.

L'état actuel de la technique, comme décrit, par example, dans EP-A-0806752 et EP-A-0613804 fait ressortir un problème qui, malgré des contraintes qui existent depuis des années, n'a pas été résolu à ce jour et dont la solution n'est pas évidente pour l'homme du métier.

La présente invention se propose de simplifier les diverses opérations par une nouvelle combinaison de moyens :

Le procédé selon l'invention, qui permet l'impression d'un film souple préalablement pré-découpé, le calage du film souple imprimé par rapport à une plaque transparente recouverte d'un adhésif sur une de ses faces et de dimensions et formes sensiblement identiques au film souple, puis le collage bord à bord de ces deux éléments se caractérise par la combinaison nouvelle des moyens suivants :
a - Le procédé comprend une imprimante transfert thermique
b - Le film souple imprimé par l'imprimante vient se positionner directement entre des cales du procédé sous la seule action de son éjection de l'imprimante. Le film souple imprimé vient se placer directement en appui, par ondulation de ce dernier, contre des butées du procédé sous la seule action de son éjection de imprimante.
c - Le procédé comprend des éléments anti-adhérents séparant le film souple et la plaque transparente adhésive.
d - Le procédé comprend une butée contre laquelle la plaque transparente est positionné par rapport au film souple.
e - La géométrie du procédé permet, grâce au mouvement sous l'action d'une force extérieure de la plaque transparente adhésive par rapport au film souple imprimé, un premier collage par contact d'un bord du film souple imprimé sur le bord correspondant de la plaque transparente adhésive.
f - Le procédé comprend une calandre, constituée de deux cylindres mous et tournants, destinée à presser le film souple imprimé sur la plaque transparente adhésive en débutant par le bord du premier collage pour fixer bords à bords ces derniers.

Grâce au procédé selon l'invention, on peut réaliser l'impression d'un film souple, le calage de ce film par rapport à une plaque transparente, puis leur collage bord à bord de façon simple et rapide. En effet, le calage du film par rapport à la plaque est inhérent au procédé et il n'est plus nécessaire de manipuler ces élément de façon précise.

L'utilisateur du procédé selon l'invention aura ainsi la tache grandement facilitée, ce qui diminuera les rebuts de fabrication et augmentera la productivité.

De plus, le procédé ne comprend que des éléments fiables et de faible coût.

L'intégration de tous les éléments du procédé dans une machine permet également un gain de place par rapport à une imprimante dissociée d'une calandre.

Le procédé selon l'invention utilise un film souple et une plaque transparente préalablement pré-découpés au même format et ne nécessite donc pas de de façonnage ou découpe ultérieurs. Ce qui facilite et accélère la fabrication du produit fini sur son lieux de mise en oeuvre.

Selon des modes particuliers de réalisations :
- le procédé peut comprendre un générateur d'ondulation de surface bombée qui crée une ondulation du film souple imprimé dans une zone proche de sa sortie de l'imprimante.
- la butée du film souple imprimé peut être l'un des cylindres de la calandre.
- le film souple imprimé peut venir en butée radialement sur l'un des cylindres de la calandre.
- les éléments anti-adhérents peuvent être constitués de plusieurs galets tournant librement.
- la plaque transparente adhésive peut venir en appui, sur sa face adhésive, par gravitation contre les éléments anti-adhérents.
- la butée de la plaque transparente adhésive peut être l'un des cylindres de la calandre.
- la plaque transparente adhésive peut venir par gravitation en appui sur l'un des cylindres de la calandre.
- le mouvement de la plaque transparente par rapport au film souple imprimé, pour réaliser un premier collage sur un bord, peut être un mouvement de rotation de la plaque transparente autour d'un axe normal à son bord le plus grand.
- le mouvement de la plaque transparente par rapport au film souple imprimé, pour réaliser un premier collage sur un bord, peut être un mouvement de rotation de la plaque transparente autour d'un des éléments anti-adhérents.
- le mouvement de la plaque transparente par rapport au film souple imprimé, pour réaliser un premier collage sur un bord, peut être une flexion de la plaque transparente.
- le mouvement de la plaque transparente par rapport au film souple imprimé, pour réaliser un premier collage sur un bord, peut être issue d'une force manuelle.
- le support du film souple imprimé peut être flexible à l'endroit où le film souple vient en contact avec la plaque transparente adhésive lors du premier collage sur un bord.
- le support du film souple imprimé peut être chanfreiné à l'endroit où le film souple vient en contact avec la plaque transparente adhésive lors du premier collage sur un bord.
- la rotation d'un des cylindres de la calandre peut entraîner directement dans la calandre le film souple et la plaque transparente après leur premier collage.
- le film souple peut être un film rétro-réfléchissant.
- la plaque transparente peut être une plaque rigide ou semie-rigide.

Dans une configuration privilégièe du procédé :
- Le calage du film souple et de la plaque transparente peut se faire sur un même coté privilégiè de façon à pouvoir utiliser des formats de largeurs différentes.
- La butée du film souple et la butée de la plaque transparente peuvent être le cylindre inférieur de la calandre.

Les dessins annexés illustrent invention :

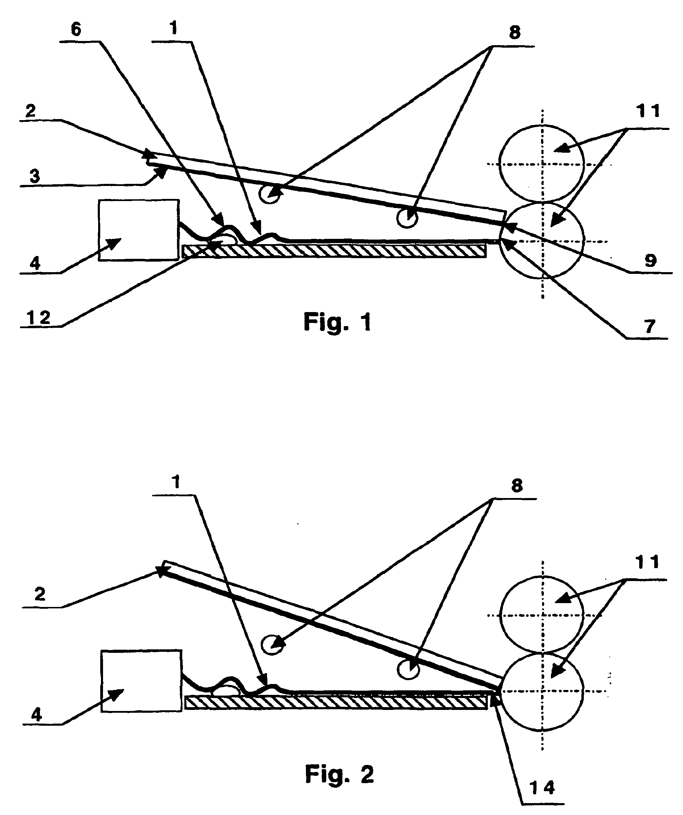

- La figure n° 1 représente en coupe le procédé après l'impression du film souple (1) et la mise en place de la plaque transparente (2).
   Le film souple (1), qui vient d'être imprimé par l'imprimante (4), est en appui sur l'un des cylindres (11) qui constitue sa butée (7) et a une ondulation (6) dont la position est déterminée par le générateur d'ondulation (12).
   La plaque transparente (2), dont sa face recouverte de l'adhésif (3) est en contact avec les éléments anti-adhérents (8), est en butée sur l'un des cylindres (11) qui constitue sa butée (9).
- La figure n° 2 représente en coupe le procédé à la fin du mouvement visant à créer un premier collage (14) entre le film souple (1) et la plaque transparente (2).
   La plaque transparente (2) a subi un mouvement de pivotement sur un des éléments anti-adhérents (8) pour venir en contact avec le bord du film souple (1) et, par la même, réaliser un premier collage (14) avec ce dernier sur son bord.

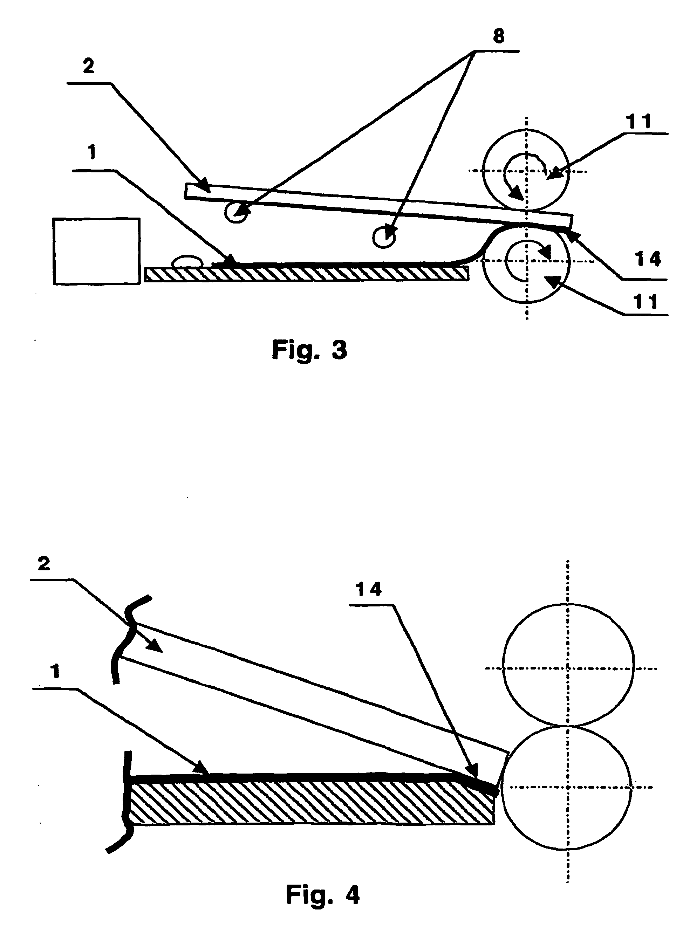

- La figure n° 3 représente une coupe du procédé lors de l'introduction du film souple (1) et de la plaque transparente (2) entre les cylindres (11) de la calandre après leur premier collage (14) entre eux.
   Le calandrage a été amorcé en zone de premier collage (14), ce qui a permis de maintenir parfaitement le positionnement du film souple (1) par rapport à la plaque transparente (2).
- La figure n° 4 représente en coupe le détail d'un support de film souple (1) qui est chanfreiné de façon à augmenter la surface de contact entre le film souple (1) et la plaque transparente (2) lors du premier collage (14).

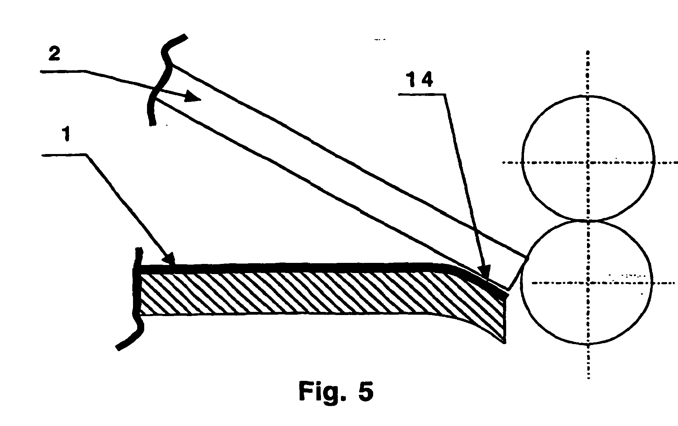

   La figure n° 5 représente en coupe le détail d'un support de film souple (1) qui est plié, en déformation plastique sous l'action de la plaque transparente (2), de façon à augmenter la surface de contact entre le film souple (1) et la plaque transparente (2) lors du premier collage (14).

A titre d'exemple non limitatif, le film et la plaque auront une dimension de 550 x 110 mm, le film souple sera un film rétro-réflechissant et la plaque transparente sera en PMMA d'une épaisseur de 3 mm.

Le procédé selon l'invention est plus particulièrement destiné à la fabrication de plaques minéralogiques et de plaques de rues.

## Revendications

1. Procédé de fabrication de plaques d'identification comprenant l'impression par transfert thermique d'un film souple préalablement pré-découpé, le calage dudit film sur une plaque transparente (2) recouverte d'un adhésif (3) sur une de ses faces, de dimensions et formes sensiblement identiques audit film, et le collage bord à bord de ces deux éléments **caractérisé par** combinaison des étapes,
- d'impression par une imprimante transfert thermique (4),
- de positionnement, sous l'action directe de son éjection de l'imprimante (4), dudit film souple imprimé (1) par ondulation (6) de ce dernier contre des butées (7),
- de séparation dudit film et de ladite plaque adhésive par des éléments anti-adhérents (8),
- de positionnement en butée (9) de ladite plaque par rapport audit film,
- d'un premier collage (14) par contact d'un bord dudit film sur le bord correspondant de ladite plaque, grâce au mouvement de cette dernière sous l'action d'une force extérieure, et
- de calandrage desdits film et plaque, entre deux cylindres (11) mous et tournants, en débutant par le bord du premier collage (14) pour fixer bords à bords ces derniers.

2. Procédé selon la revendication précédente **caractérisé en ce que** l'ondulation (6) du film (1) est réalisée par un générateur d'ondulation (12) de surface bombée situé dans une zone proche de la sortie de l'imprimante (4).

3. Procédé selon l'une des revendications précédentes **caractérisé en ce que** la butée (7) du film souple (1) imprimé est l'un des cylindres (11) de la calandre.

4. Procédé selon l'une des revendications précédentes **caractérisé en ce** le film souple (1) imprimé vient en butée radialement sur l'un des cylindres (11) de la calandre.

5. Procédé selon l'une des revendications précédentes **caractérisé en ce que** les éléments anti-adhérents (8) sont constitués de plusieurs galets tournant librement.

6. Procédé selon l'une des revendications précédentes **caractérisé en ce que** la plaque transparente (2) adhésive vienne en appui, sur sa face adhésive, par gravitation contre les éléments anti-adhérents (8).

7. Procédé selon l'une des revendications précédentes **caractérisé en ce que** la butée (9) de la plaque transparente (2) adhésive est l'un des cylindres (11) de la calandre.

8. Procédé selon les deux revendications précédentes **caractérisé en ce que** la plaque transparente (2) adhésive vienne par gravitation en appui sur l'un des cylindres (11) de la calandre.

9. Procédé selon l'une des revendications précédentes **caractérisé en ce que** le mouvement de la plaque transparente (2) par rapport au film souple (1) imprimé pour réaliser un premier collage (14) sur un bord est un mouvement de rotation de la plaque transparente (2) autour d'un axe normal à son bord le plus grand.

10. Procédé selon l'une des revendications précédentes **caractérisé en ce que** le mouvement de la plaque transparente (2) par rapport au film souple (1) imprimé pour réaliser un premier collage (14) sur un bord est un mouvement de rotation de la plaque transparente (2) autour d'un des éléments anti-adhérents (8).

11. Procédé selon l'une des revendications précédentes **caractérisé en ce que** le mouvement de la plaque transparente (2) par rapport au film souple (1) imprimé pour réaliser un premier collage (14) sur un bord est une flexion de la plaque transparente (2).

12. Procédé selon l'une des revendications précédentes **caractérisé en ce que** le mouvement de la plaque transparente (2) par rapport au film souple (1) imprimé pour réaliser un premier collage (14) sur un bord est issue d'une force manuelle.

13. Procédé selon l'une des revendications précédentes **caractérisé en ce que** le support du film souple (1) imprimé est flexible à l'endroit où le film souple (1) vient en contact avec la plaque transparente (2) adhésive lors du premier collage (14) sur un bord.

14. Procédé selon l'une des revendications précédentes **caractérisé en ce que** le support du film souple (1) imprimé est chanfreiné à l'endroit où le film souple (1) vient en contact avec la plaque transparente (2) adhésive lors du premier collage (14) sur un bord.

15. Procédé selon l'une des revendications précédentes **caractérisé en ce que** la rotation d'un des cylindres (11) de la calandre entraîne directement dans la calandre le film souple (1) et la plaque transparente (2) après leur premier collage (14).

16. Procédé selon l'une des revendications précédentes **caractérisé en ce que** le film souple (1) est un film rétro-réfléchissant.

## Claims

1. Process for the fabrication of identification plates comprising printing by thermal transfer on to a precut flexible film, with the said film fixed to a transparent plate (2) with an adhesive coating (3) on one of the faces thereof, of more or less identical size to the said film, and with the edge-to-edge bonding of the two items
**characterised in that** the following stages are combined,
- printing by a thermal transfer printer (4),
- positioning, through the direct effect of being ejected from the printer (4), of said flexible film (1) by undulation (6) thereof against the gauges (7),
- separation of said film and said adhesive plate by anti-adherent elements (8),
- positioning of said plate against the gauge (9) in relation to said film,
- a first bonding (14) by one edge of said film being brought into contact with the corresponding edge of said plate, by the movement of said plate through the action of an external force, and
- calendering of said film and plate, between two soft, rotating cylinders (11), starting with the edge of the first bonding (14) to produce the edge-to-edge attachment of the film and plate.

2. Process as claimed in the preceding claim, wherein the undulation (6) of the film (1) is produced by a convex undulation generator (12) positioned close to the output of the printer (4).

3. Process as claimed in one of the preceding claims, wherein the gauge (7) of the printed flexible film (1) is one of the calender cylinders (11).

4. Process as claimed in one of the preceding claims, wherein the printed flexible film (1) comes to a stop radially against one of the calender cylinders (11).

5. Process as claimed in one of the preceding claims, wherein the anti-adherent elements (8) are comprised of several idler rollers.

6. Process as claimed in one of the preceding claims, wherein the adhesive transparent plate (2) comes to rest on its adhesive side by gravitation against the anti-adherent elements (8).

7. Process as claimed in one of the preceding claims, wherein the gauge (9) of the adhesive transparent plate (2) is one of the calender cylinders (11).

8. Process as claimed in the two preceding claims, wherein the adhesive transparent plate (2) comes to rest on one of the calender cylinders (11) by gravitation.

9. Process as claimed in one of the preceding claims, wherein the movement of the transparent plate (2) in relation to the printed flexible film (1) for the purposes of the first bonding (14) on one edge consists of a rotational movement of the transparent plate (2) around a normal axis on its largest edge.

10. Process as claimed in one of the preceding claims, wherein the movement of the transparent plate (2) in relation to the printed flexible film (1) for the purposes of the first bonding (14) on one edge consists of a rotational movement of the transparent plate (2) around one of the anti-adherent elements.

11. Process as claimed in one of the preceding claims, wherein the movement of the transparent plate (2) in relation to the printed flexible film (1) for the purposes of the first bonding (14) on one edge and a bend in the transparent plate (2).

12. Process as claimed in one of the preceding claims, wherein the movement of the transparent plate (2) in relation to the printed flexible film (1) for the purposes of the first bonding (14) on one edge is the result of a manually applied force.

13. Process as claimed in one of the preceding claims, wherein the mounting of the printed flexible film (1) is flexible at the point where the flexible film (1) comes into contact with the adhesive transparent plate (2) at the moment of the first bonding (14) on one edge.

14. Process as claimed in one of the preceding claims, wherein the mounting of a printed flexible film (1) is canted off at the point where the flexible film (1) comes into contact with the adhesive transparent plate (2) at the moment of the first bonding (14) on one edge.

15. Process as claimed in one of the preceding claims, wherein the rotation of one of the calender cylinders (11) directly draws the flexible film (1) and the transparent plate (2) into the calender after the first bonding (14).

16. Process as claimed in one of the preceding claims, wherein the flexible film (1) is retroreflecting film.

## Patentansprüche

1. Herstellungsverfahren von Typenschildern, welches das Bedrucken durch Wärmeübertragung einer vorher zugeschnittenen flexiblen Folie auf eine transparente Platte einschließt, das Positionieren der besagten Folie auf einer mit einem Kleber (3) auf einer ihrer Seiten überzogenen Platte (2), deren Dimensionen und Formen deutlich dieser Folie gleichen und das stumpfe Verkleben dieser beiden Elemente, das durch die Kombination der folgenden Etappen **gekennzeichnet** ist,
- Bedrucken durch einen Thermodrucker (Wärmeübertragung) (4),
- Positionieren unter der direkten Wirkung des Auswerfens des Druckers (4), wobei die besagte flexible Folie (1) durch Welligkeit (6) dieser Folie gegen Stopper (7) bedruckt wird,
- Trennung der besagten Folie und der Klebe-Platte durch die Trennmittel (8),
- Positionierung der besagten Platte am Stopper (9) bezogen auf die genannte Folie,
- eines ersten Klebens (14) durch Kontakt der besagten Folie am Rand der besagten Platte dank der Bewegung dieser letzteren unter der Wirkung einer äußeren Kraft, und
- Kalandern der besagten Folie und der Platte zwischen zwei nachgiebigen und sich drehenden Zylindern (11), wobei am Rand der ersten Verklebung (14) begonnen wird, um die Ränder dieser stumpf zu befestigen.

2. Verfahren nach dem vorstehenden Patentanspruch **dadurch gekennzeichnet, dass** die Welligkeit (6) der Folie (1) durch einen Welligkeitsgenerator (12) mit gewölbter Fläche realisiert wird, welcher sich in der Nähe des Druckerausgangs (4) befindet.

3. Verfahren nach einem der Ansprüche oben **dadurch gekennzeichnet, dass** der Stopper (7) der flexiblen, bedruckten Folie (1) einer der Zylinder (11) der Kalander ist.

4. Verfahren nach einem der Ansprüche oben **dadurch gekennzeichnet, dass** die flexible, bedruckte Folie (1) radial in Anschlag an einen der Zylinder (11) der Kalander kommt.

5. Verfahren nach einem der Ansprüche oben **dadurch gekennzeichnet, dass** die Trennmittel (8) aus mehreren frei drehenden Rollen bestehen.

6. Verfahren nach einem der Ansprüche oben **dadurch gekennzeichnet, dass** die transparente Klebeplatte (2) durch Schwerkraftwirkung auf ihrer klebenden Seite gegen die Trennmittel (8) zum Aufliegen kommt.

7. Verfahren nach einem der Ansprüche oben **dadurch gekennzeichnet, dass** der Stopper (9) der transparenten Klebeplatte (2) einer der Zylinder (11) der Kalander ist.

8. Verfahren nach den beiden Ansprüchen oben **dadurch gekennzeichnet, dass** die transparente Klebeplatte (2) durch Schwerkraftwirkung auf einem der Zylinder (11) der Kalander zum Aufliegen kommt.

9. Verfahren nach einem der Ansprüche oben **dadurch gekennzeichnet, dass** die Bewegung der transparenten Platte (2) bezogen auf die flexible bedruckte Folie (1) zum Erstellen eines ersten Klebens (14) an einem Rand eine Drehbewegung der transparenten Platte (2) um eine Hochachse an ihrem größten Rand ist.

10. Verfahren nach einem der Ansprüche oben **dadurch gekennzeichnet, dass** die Bewegung der transparenten Platte (2) bezogen auf die flexible bedruckte Folie (1) zum Erstellen eines ersten Verklebens (14) an einem Rand eine Drehbewegung der transparenten Platte (2) um eins der Trennmittel ist.

11. Verfahren nach einem der Ansprüche oben **dadurch gekennzeichnet, dass** die Bewegung der transparenten Platte (2) bezogen auf die flexible bedruckte Folie (1) zum Erstellen des ersten Verklebens (14) an einem Rand eine Durchfederung der transparenten Platte (2) ist.

12. Verfahren nach einem der Ansprüche oben **dadurch gekennzeichnet, dass** die Bewegung der transparenten Platte (2) bezogen auf die flexible bedruckte Folie (1) zum Erstellen eines ersten Verklebens (14) an einem Rand aus einer manuellen Kraft hervorgeht.

13. Verfahren nach einem der Ansprüche oben **dadurch gekennzeichnet, dass** der Träger der flexiblen bedruckten Folie (1) an der Stelle biegsam ist, wo die flexible Folie (1) mit der transparenten Klebeplatte (2) beim ersten Kleben (14) an einem Rand in Kontakt kommt.

14. Verfahren nach einem der Ansprüche oben **dadurch gekennzeichnet, dass** der Träger der flexiblen bedruckten Folie (1) an der Stelle abgeschrägt ist, wo die flexible Folie (1) mit der transparenten Klebeplatte (2) beim ersten Kleben (14) an einem Rand in Kontakt kommt.

15. Verfahren nach einem der Ansprüche oben **dadurch gekennzeichnet, dass** die Drehung eines der Zylinder (11) der Kalander die flexible Folie (1) und die transparente Platte (2) nach ihrem ersten Verkleben (14) direkt in die Kalander vorwärts zieht.

16. Verfahren nach einem der Ansprüche oben **dadurch gekennzeichnet, dass** die flexible Folie (1) eine reflektierende Folie ist.
